# EUROPEAN PATENT APPLICATION

(11) **EP 4 835 285 A1**
(43) Date of publication of application: **04.11.2026**
(21) Application number: 26175007.9
(22) Date of filing: 28.04.2026
(51) Int. Cl.: F02M 47/02, F02M 63/00

(54) **ARMATURES AND ARMATURE ASSEMBLIES FOR USE WITH VALVES IN FUEL INJECTORS**

(30) Priority: 01.05.2025 IN 202541042202
(71) Applicant: Cummins-Scania HPCR System, LLC, Columbus, Indiana 47201 (US)
(72) Inventor: RANJAN, Quereeta, 560083 Bengaluru (IN); PARAB, Vivek Vasant, 411045 Pune (IN); C.S., Sandeep, 560040 Bengaluru (IN); BOBADE, Amol Jagannath, 411027 Pune (IN)
(74) Representative: Cleveland Scott York

(57) **Abstract**

Armatures and armature assemblies are disclosed for use in association with actuation of a valve, such as for fuel injectors, fuel cells, and/or fuel pumps. The armatures include a body having a first end with a flange and a shaft extending from the flange to a second end of the body. The second end includes a configuration to slow the velocity of the armature during closing of the valve to reduce stress on one or more components of the valve upon impact with the armature. The armatures can also or alternatively include a shaft configured to reduce end of injection delay.

## Description

### TECHNICAL FIELD:

The present disclosure generally relates to devices for valves such as used in fuel injectors, fuel cells, and/or fuel pumps, and more particularly, to armatures and armature assemblies for use in the same.

### BACKGROUND

Armatures can be used in the actuation of valves that use a solenoid, such as for fuel injectors, fuel cells, fuel pumps, and/or fluid flow control devices. Armatures can be controlled to moved longitudinally between open and closed positions to initiate and terminate the fuel flow through the fuel injector. This motion results in impact between the armature and one or more other components of the fuel injector, such as check ball poppets or other valve seat components.

The impact force depends on multiple factors, such as armature mass, preload on the armature, stroke length, and closing velocity, for example. The impact force induces stress on the armature, check ball poppet, and other components. In addition, delays in shutting off fuel flow by closing the armature at the end of injection can result in fuel spray interaction with the cylinder liner, increasing in-cylinder soot and in-cylinder emissions. Therefore, there remains a need for further improvement in this area.

### DISCLOSURE OF ILLUSTRATIVE EMBODIMENTS

For the purposes of clearly, concisely and exactly describing illustrative embodiments of the present disclosure, the manner, and process of making and using the same, and to enable the practice, making and use of the same, reference will now be made to certain exemplary embodiments, including those illustrated in the figures, and specific language will be used to describe the same. It shall nevertheless be understood that no limitation of the scope of the invention is thereby created, and that the invention includes and protects such alterations, modifications, and further applications of the exemplary embodiments as would occur to one skilled in the art.

### SUMMARY

An armature and/or armature assembly for use in association with actuation of a valve, such as for fuel injectors, fuel cells, and/or fuel pumps, is disclosed. The armature includes a body having a first end with a flange and a shaft extending from the flange to a second end of the body.

In an embodiment, the second end of the body of the armature includes an end surface configured to slow the velocity of the armature during closing. The velocity reduction reduces impact force and stress on one or more components of the valve upon impact.

In an embodiment, the shaft of the armature includes a configuration to increase armature closing velocity. Increasing the armature closing velocity reduces delays in start-of-injection and/or in end-of-injection for injection of fuel.

In one embodiment of the present disclosure, an armature and/or armature assembly is provided that includes an armature with a body extending along a longitudinal axis between a first end and an opposite second. The body includes a flange at the first end and a shaft extending from the flange. The shaft extends along the longitudinal axis from the flange to the second end of the body. The body includes a passage that extends along the longitudinal axis. The passage opens at the first and second ends of the body. The second end of the body includes an end surface extending around the passage. The end surface projects radially outwardly from the shaft in order to slow the velocity of the armature during closing.

In another embodiment of the present disclosure, an armature and/or armature assembly is provided that includes an armature with a body extending along a longitudinal axis between a first end and an opposite second. The body includes a flange at the first end and a shaft extending from the flange. The shaft extends along the longitudinal axis from the flange to the second end of the body. The body includes a passage that extends along the longitudinal axis. The passage opens at the first and second ends of the body. The second end of the body includes an end surface extending around the passage. The shaft includes one or more circumferential grooves extending therearound that are configured to receive fluid flow along the armature so the armature has an increased closing velocity, reducing start-of-injection and/or end-of-injection delays.

This summary is not intended to identify key or essential features of the claimed subject matter, nor is it intended to be used as an aid in limiting the scope of the claimed subject matter. Further embodiments, forms, objects, features, advantages, aspects, and benefits shall become apparent from the following description and drawings.

### BRIEF DESCRIPTION OF THE DRAWINGS

The description herein makes reference to the accompanying drawings wherein like numerals refer to like parts throughout the several views, and wherein:
FIG. 1 is a longitudinal cross-sectional view illustrating certain aspects of a valve including an armature assembly according to an example embodiment of the present disclosure.
FIG. 2 is an elevation view of an armature of the armature assembly of FIG. 1.
FIG. 3 is an enlarged elevation view of the second end of the armature of FIG. 2.
FIG. 4 is a longitudinal cross-sectional view of an armature assembly with another embodiment armature in the valve of FIG. 1.
FIG. 5 is a longitudinal cross-sectional view of an armature assembly with another embodiment armature in the valve of FIG. 1.
FIG. 6 is a longitudinal cross-sectional view of another embodiment armature assembly with the armature of FIG. 5 and another embodiment check ball poppet in the valve of FIG. 1.
FIG. 7 is an elevation view of another embodiment armature according to the present disclosure.
FIG. 8 is a longitudinal cross-sectional view of an armature assembly with the armature of FIG. 7 in the valve of FIG. 1.
FIG. 9 is a longitudinal cross-sectional view of another embodiment armature assembly.
FIG. 10 is a longitudinal cross-section view of another embodiment armature.
FIG. 11 is a cross-sectional view of an example fuel injector for an internal combustion engine that includes the armature assemblies and armatures of the present disclosure.

### DETAILED DESCRIPTION OFAN ILLUSTRATIVE EMBODIMENTS

In the following detailed description, reference is made to the accompanying drawings which form a part hereof, and in which is shown by way of illustration specific embodiments in which the present disclosure is practiced. These embodiments are described in sufficient detail to enable those skilled in the art to practice the present disclosure, and it is to be understood that other embodiments can be utilized and that structural changes can be made without departing from the scope of the present disclosure. Therefore, the following detailed description is not to be taken in a limiting sense, and the scope of the present disclosure is defined by the appended claims and their equivalents.

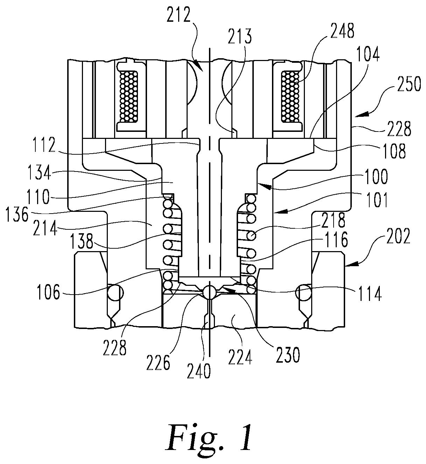

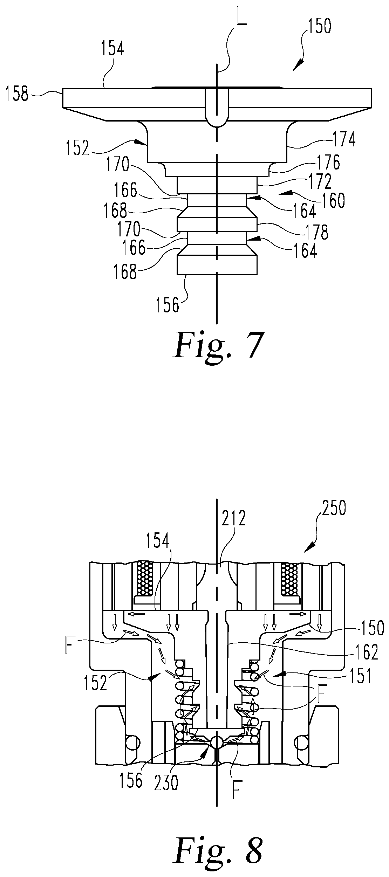

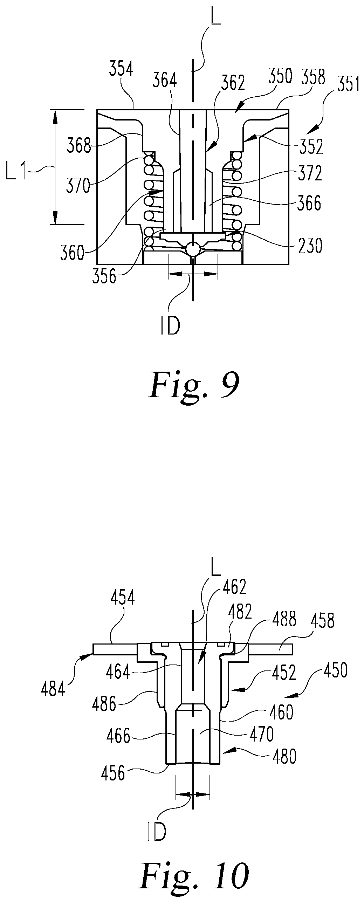

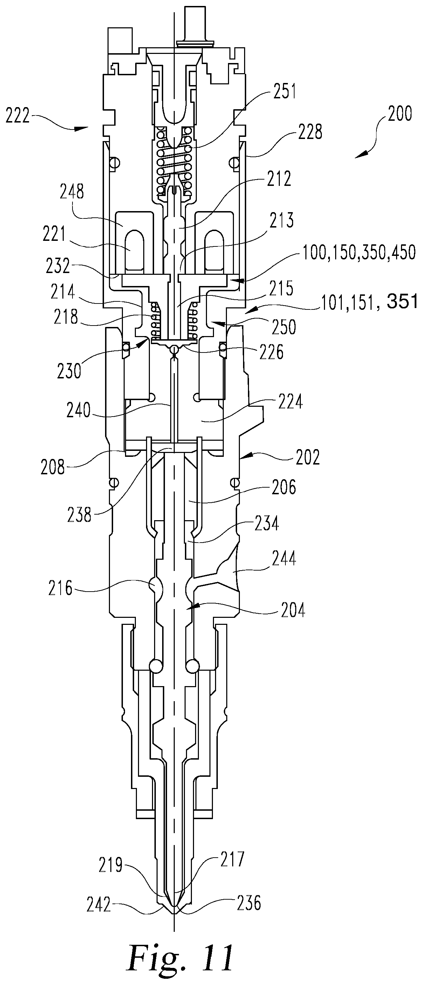

FIGs. 1-6 are illustrations associated with an armature 100 and/or armature assembly 101 in accordance with certain embodiments of the present disclosure. FIGs. 7-8 are illustrations associated with an armature 150 and/or armature assembly 151 in accordance with another embodiment of the present disclosure. FIG. 9 is an illustration associated with an armature 350 and/or armature assembly 351 in accordance with another embodiment of the present disclosure and FIG. 10 is an illustration associated with an armature 450 in accordance with another embodiment of the present disclosure. FIG. 11 is a detailed cross-sectional illustration of an embodiment of a fuel injector 200 to show an exemplary implementation of armature 100, 150, 350, 450 and/or armature assemblies 101, 151, 351 in a valve 250 of a particular fuel injector. While the present disclosure describes particular configurations of fuel injector 200, armatures 100, 150, 350, 450 and/or armature assemblies 101, 151, 351 one or more of these features described in the present disclosure may be omitted, and other features and applications are not precluded. Armatures 100, 150, 350, 450 and/or armature assemblies 101, 151, 351 of the present disclosure can be used on any fuel injector, fuel cell, fuel pump, and/or flow control valve compatible therewith.

As shown in these figures, in an embodiment of the present disclosure, armature 100 of FIGs. 1-3 includes a body 102 extending along a longitudinal axis L between a first end 104 and an opposite second 106. Body 102 includes a flange 108 at first end 104 and a shaft 110 extending from flange 108. Flange 108 extends radially outwardly from shaft 110. Shaft 110 extends from a distal side of flange 108 along longitudinal axis L to second end 106 of body 102. Body 102 includes a passage 112 that extends along longitudinal axis L. Passage 112 opens at first and second ends 104, 106 of body 102.

Second end 106 of body 102 includes an end surface 114 extending around passage 112. End surface 114 is formed at least in part by a circumferential protrusion 116 projecting radially outwardly from shaft 110 at second end 106. In an embodiment, end surface 114 is planar and orthogonal to longitudinal axis L, but other configurations and/or orientations are not precluded. In an embodiment, end surface 114 is ring-shaped with an inner diameter formed by passage 112 and an outer diameter D_{ES} that is greater than a third diameter D₃ of shaft 114 adjacent second end 106.

In an embodiment of the present disclosure, armature 100 is provided with armature assembly 101. Armature assembly 101 includes armature 100 and a check ball poppet 230. Check ball poppet 230 includes a check ball 226 that is positionable against a pilot valve seat 224 to close a valve seat central passage 240 that permits fluid flow therethrough when opened. Check ball poppet 230 also includes a plate 228 between check ball 226 and end surface 114. End surface 114 of armature 100 contacts plate 228 to seat check ball 226 against pilot valve seat 224 to close valve seat central passage 240.

Flange 108 of body 102 includes an outer edge 120 forming a circular shape. Flange 108 projects radially outwardly from passage 112, and shaft 110 extends axially from the distal side of flange 108. In an embodiment, flange 108 is disc-shaped and shaft 110 is cylindrical in shape, and passage 112 extends longitudinally through flange 108 and shaft 110 and is centered along longitudinal axis L.

In an embodiment, flange 108 includes an outer diameter defined by outer edge 120 that is larger than the largest outer diameter portion defined by the outer surface 132 of shaft 110. Flange 108 includes a plurality of slots 122 that extend through flange 108. Each of the plurality of slots 122 extends radially inwardly from outer edge 120 of flange 108 to a terminal end 124 of the corresponding one of the plurality of slots 122.

In an embodiment, the plurality of slots 122 is four slots 122 spaced equi-angularly around flange 108. In an embodiment, flange 108 may include a plurality of axially extending through-holes to facilitate fluid flow through flange 108, such as by reducing drag during closing and squeeze film pressure spikes during opening. Through-holes on flange 108 help reduce pressure rise on top of armature 100 during opening thus assist in reducing start-of-injection delay. The through- holes also reduce drag during both opening and closing motion, contributing in both start-of-injection and end-of-injection delay reduction. In an embodiment, flange 108 may be tapered in thickness as it extends radially outwardly to reduce a mass of armature 100 and assist in movement of the armature 100 during valve opening and closing operations.

In an embodiment, shaft 110 of body 102 includes an outer surface 132 extending from flange 108 to second end 106. The outer surface 132 of shaft 110 extends from second end 106 of body 102 to the distal face 132 of flange 108. In an embodiment, the outer surface 132 of shaft 110 has a stepped surface profile along a portion of the length of shaft 110.

In an embodiment, the stepped surface profile of outer surface 132 of shaft 110 includes a first shaft portion 134 adjacent to flange 108 having a first outer diameter D1. The stepped surface profile also includes a second shaft portion 136 adjacent to first shaft portion 134. Second shaft portion 136 includes a second outer diameter D2 that is less than first outer diameter D1. The stepped outer surface profile of outer surface 132 of shaft 110 includes a third shaft portion 138 adjacent to second shaft portion 136. Third shaft portion 138 extends to circumferential protrusion 116 of body 102. Third shaft portion 138 has a third outer diameter D3 that is less than the second outer diameter D2 and also less than the diameter D_{ES} of end surface 114.

Second end 106 includes end surface 114 extending around longitudinal axis L. End surface 114 is formed on a distal side of circumferential protrusion 116 in facing relation to check ball poppet 230. End surface 114 provides a radial outward projection from outer surface 132 of shaft 110 to reduce a closing velocity of the armature 100.

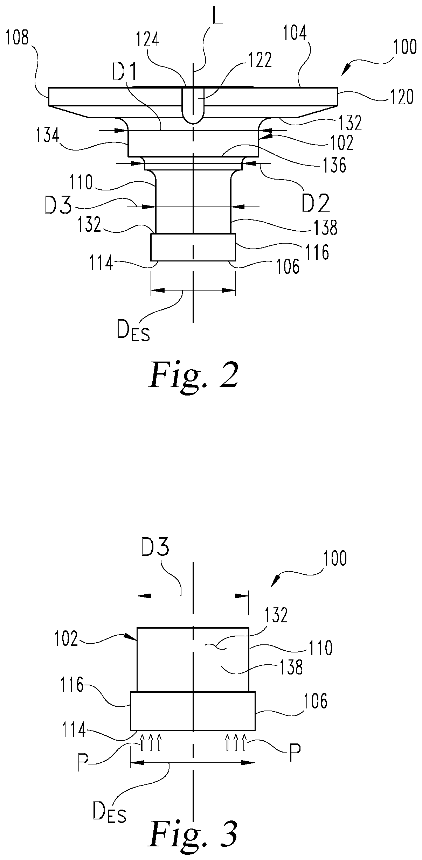

As armature 100 is displaced distally during closing of valve 250, fluid is pressurized between end surface 114 and plate 228, such as shown by arrows P in FIG. 3. The pressurized fluid provides resistance to the closing of armature 100 and reduces its closing velocity. Since the area of end surface 114 is greater than the cross-sectional area of shaft 110 at third shaft portion 138, the armature closing velocity is reduced in comparison to an arrangement in which circumferential protrusion 116 is eliminated and third diameter D3 is carried through to end surface 114. The reduction in the armature closing velocity reduces the impact forces and stresses on armature 100, plate 228, ball check 226, and pilot valve seat 224.

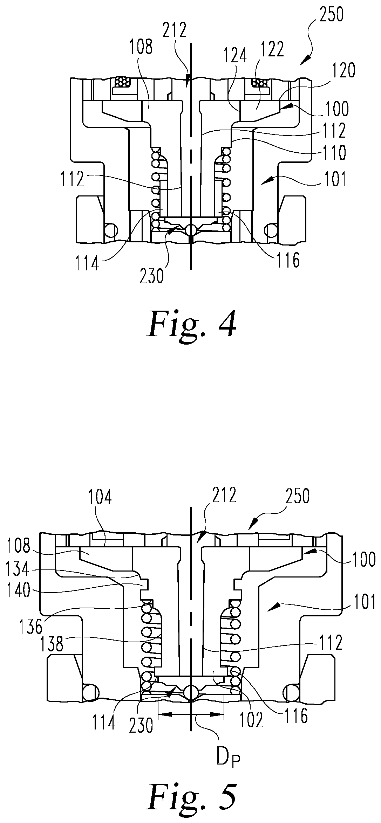

Referring to FIG. 4, an embodiment of armature 100 is shown in which end surface 114 is formed by a circumferential protrusion 116' that is a cylindrical sleeve press fit or otherwise secured to shaft 110. In the embodiment of FIGs. 1-3, circumferential protrusion 116 is formed integrally with body 102 in a mono-lithic, one-piece armature body 102.

Referring to FIG. 5, an embodiment of armature 100 is shown in which a mass of body 102 is reduced by forming a circumferential groove 140 around first shaft portion 134. In addition, circumferential protrusion 116 has a length along longitudinal axis L that is minimized while providing sufficient material to form end surface 114 with end surface diameter D_{ES} and maintain the structural integrity of body 102 at second end 106.

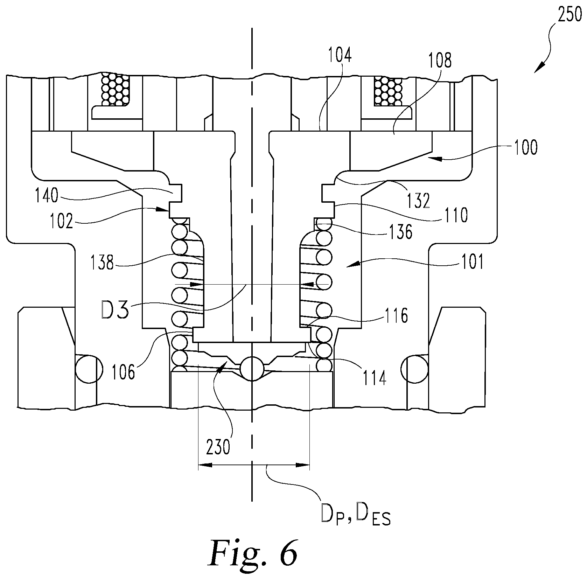

In the embodiments of FIGs. 1-5, the diameter D_{ES} of end surface 114 is greater than a diameter D_{P} of check ball poppet 230. In FIG. 6, the diameter D_{P} of check ball poppet 230 is increased to correspond in size to the diameter D_{ES} of end surface 114. In an embodiment, diameter D_{P} is equal to diameter D_{ES}. This increase in diameter D_{P} increases the squeeze film force, reducing the closing velocity and travel depth of armature 100.

FIGs. 7-8 show another embodiment armature assembly 151 with an armature 150 for use in association with actuation of valve 250. Armature 150 is similar to armature 100 but does not include circumferential projection at second end 156. Rather, armature 150 includes a plurality of circumferential grooves 164 along shaft 160, as discussed further below. Circumferential grooves 164 receive fluid flow F during actuation of armature 150 from the first end 154 and second end 156 as shown in FIG. 8. Circumferential grooves 164 allow a faster opening and closing velocity to be achieved, which reduces start-of-injection and/or end-of-injection delays.

Armature 150 includes a body 152 extending along longitudinal axis L between first end 154 and an opposite second end 156. Body 152 includes a flange 158 at first end 154. Shaft 160 extends from flange 158 along longitudinal axis L from flange 158 to second end 156 of body 152. Body 152 also includes a passage 162 for plunger 212 that extends along longitudinal axis L. Passage 162 opens at first and second ends 154, 156 of body 152. Shaft 160 includes a plurality of circumferential grooves 164 extending therearound.

The plurality of circumferential grooves 164 are spaced longitudinally from one another along shaft 160 and are positioned adjacent to second end 156 of body 152 in order to receive fluid flow to increase a closing velocity of armature 150. In the illustrated embodiment, the plurality of circumferential grooves 164 includes two circumferential grooves 164 spaced longitudinally from one another on shaft 160.

Body 152 of armature 150 includes an outer surface 172 that extends from second end 156 of body 152 to flange 158. Outer surface 172 has a stepped surface profile that includes a first shaft portion 174 adjacent to flange 158 having a first outer diameter D1. Outer surface 172 has a second shaft portion 176 adjacent to first shaft portion 174. Second shaft portion 176 has a second outer diameter D2 that is less than the first outer diameter D1. Outer surface 172 has a third shaft portion 178 adjacent to second shaft portion 176. Third shaft portion 178 extends from second shaft portion 176 to second end 156 of body 152. The plurality of circumferential grooves 164 are all located on third shaft portion 178.

In an embodiment, each of the circumferential grooves 164 includes a cylindrical portion 166 and a frusto-conical portion 168. The frusto-conical portion 168 provides a transition from outer surface 172 of shaft 160 to cylindrical portion 166 of the corresponding circumferential groove 164. Frusto-conical portion 168 extends from cylindrical portion 166 of the corresponding circumferential groove 164 toward the second end 156 of body 152 to outer surface 172. In addition, each of the circumferential grooves 164 includes a lip 170 extending from the cylindrical portion 166 thereof to outer surface 172 of the shaft 160. In an embodiment, lip 170 is orthogonal to longitudinal axis L, frusto-conical portion 168 is oblique to longitudinal axis L, and cylindrical portion 166 is parallel to longitudinal axis L.

FIG. 9 shows another embodiment armature assembly 351 with an armature 350 for use in association with actuation of valve 250. Armature 350 is similar to armature 100 but does not include circumferential projection at second end 356. Rather, armature 350 includes a shaft 360 without any exterior grooves or projections distally of first and second shaft portions 368, 370. As shown, first shaft portion 368 extends distally from a flange 358 to second shaft portion 370, and the shaft 360 includes a smooth shaft portion 372 extending distally from second shaft portion 370 to second end 356. Smooth shaft portion 372 lacks any outwardly extending protrusions or radially inward grooves formed thereon or therein.

Armature 350 includes a body 352 extending along longitudinal axis L between first end 354 and an opposite second end 356. Body 352 includes flange 358 at first end 354. Shaft 360 extends from flange 358 along longitudinal axis L from flange 358 to second end 356 of body 352. Body 352 also includes a passage 362 for plunger 212 that extends along longitudinal axis L. Passage 362 opens at first and second ends 354, 356 of body 352.

In the illustrated embodiment, passage 362 includes a first, proximal portion 364 that closely fits around plunger 212, and a second, distal portion 366 along smooth shaft portion 372 that is spaced more widely from plunger 212 than proximal portion 364. The surface area at second end 356 of armature 350 is thus smaller due to the wider inner diameter ID of distal portion 366 and the lack of any outwardly extending circumferential projection at second end 356. In an embodiment, the ratio of plunger length L1 to inner diameter ID is 2. The mass reduction and reduction in squeeze force on armature 350 reduces the overtravel time for armature 350.

FIG. 10 illustrates another embodiment armature 450 for use in associate with actuation of valve 250. Armature 450 is similar to armature 350 but includes holes 470 in shaft 460. Armature 450 includes a body 452 extending along longitudinal axis L between first end 454 and an opposite second end 456. Body 452 includes a flange 458 at first end 454. Shaft 460 extends from flange 458 along longitudinal axis L from flange 458 to second end 456 of body 452. Body 452 also includes a passage 462 for plunger 212 that extends along longitudinal axis L. Passage 462 opens at first and second ends 454, 456 of body 452. Passage 462 includes a first, proximal portion 464 that closely fits around plunger 212, and a second, distal portion 466 with an inner diameter ID that is spaced widely from plunger 212.

In an embodiment, a pair of holes 470 are provided on opposite sides of shaft 460 at distal portion 466 of passage 462. In a specific embodiment, the holes 470 are 1 millimeters in diameter. Other embodiments contemplate other numbers and/or sizes of holes 470 in shaft 460. The hole(s) 470 provide mass reduction and overtravel time reduction for armature 450. Holes 470 can be implemented in any of the armature embodiments discussed herein.

In addition, armature 450 is shown in two separate pieces that are secured to one another. A first piece of armature 450 includes a shaft piece 480 that includes shaft 460 and a shaft flange 482 at first end 454. A second piece of armature 450 includes a flange piece 484 that includes flange 458 and a shaft portion 486 extending distally from flange 458 around a proximal part of shaft piece 480. Shaft flange 482 sits within a recess 488 in flange piece 484 at first end 454. Still other embodiments contemplate an armature provided in three pieces.

With reference to FIG. 11, there is illustrated a cross-sectional view of an embodiment of fuel injector 200 with an exemplary armature assembly 101, 151, 351 and armature 100, 150, 350, 450 employed in association with valve 250 of fuel injector 200. Fuel injector 200 generally includes an injector body 202, an elongated needle valve 204, a needle sleeve 206, a needle seal 208, armature 100 or 150 or 350 or 450, and a plunger 212 extending through passage 112 or 162 of armature 100 or 150 or 350 or 450. Injector body 202 includes upper chamber 214 and lower chamber 216 for receiving a plurality of components therein as will occur to one of skill in the art with the benefit and insight of the present disclosure.

Armature 100, 150, 350, 450 is configured to move up and down in injector body 202 to facilitate opening and closing of valve 250 of fuel injector 200. Stator assembly 222, which includes solenoid 248, may be disposed directly above armature 100, 150, 350, 450 so that when solenoid 248 is in an active state, armature 100, 150, 350, 450 moves to an upward position. When solenoid 248 is in an inactive state, such as the end of injection, armature 100, 150, 350, 450 moves to a downward position. An air gap such as, for example, air gap 232 may provide a distance between stator assembly 222 and armature 100, 150, 350, 450. As discussed above, armature 100, 350, 450 can be configured to slow its closing velocity and/or armature 150 can be configured to reduce end-of-injection delays.

An inner cavity within upper chamber 214 of injector body 202 receives armature 100 or 150 or 350 or 450, plunger 212, armature spring 218, and stator assembly 222. An inner cavity within lower chamber 216 receives needle valve 204, needle sleeve 206, needle seal 208, pilot valve seat 224, and check ball 226. Upper chamber 214 provides a lower pressure environment of fuel injector 200 relative to a high pressure environment below check ball 226. Stator assembly 222 is fixed within upper chamber 214 and retained in place by a retainer. A bottom surface of stator assembly 222 is a precision calibrated distance away from an upper surface of armature 100, 150, 350, 450. At the other end of armature 100, 150, 350, 450 is check ball poppet 230 that supports armature 100, 150, 350, 450 via abutting engagement.

A middle section of plunger 212 includes a shoulder 213 disposed on the upper surface of armature 100 which creates a reciprocal connection such that when armature 100, 150, 350, 450 moves in an upward direction, plunger 212 moves therewith. Armature spring 218 is biased against flange 108, 158, 358, 458 of armature 100, 150, 350, 450 and biases armature 100, 150, 350, 450 and plunger 212 in an upward direction. Armature 100, 150, 350, 450 includes passage 112, 162, 362, 462 that receives a shaft 215 of plunger 212 therethrough. An outer diameter of the shaft 215 is sized and configured to provide a close or match fit in relation to at least a portion of an inner diameter of passage 112, 162, 362, 462 while still permitting sliding movement of plunger 212. This close/match fit inhibits fuel leakage between the outer diameter of the shaft 215 of plunger 212 and the inner diameter of passage 112, 162, 362, 462 while permitting relative sliding movement.

Lower chamber 216 including an inner cavity houses needle valve 204, needle sleeve 206, needle seal 208, pilot valve seat 224, and check ball 226. The inner cavity also houses a needle spring 234 that biases needle valve 204 in a downward direction and applies a closing spring force to needle valve 204 thereby preventing fuel from exiting through injector orifice 236. Needle seal 208 includes control orifices 238 integrated within needle seal 208 to admit fuel into needle seal 208 while a proximal end of needle valve 204 is positioned within needle seal 208. Needle seal 208 is disposed above needle valve 204 and includes end points that terminate adjacent needle sleeve 206.

A surface of a lower end of pilot valve seat 224 abuts a top surface of needle seal 208, while a surface of an upper end of pilot valve seat 224 is disposed immediately below armature spring 218. Pilot valve seat 224 further includes valve seat central passage 240 that extends longitudinally from the lower end of pilot valve seat 224 toward the upper end.

Needle valve 204 moves up and down longitudinally in the injector body 202 to selectively start and stop fuel injection from the injector body 202. A distal end 217 of needle valve 204 is located at a distal portion of the injector body 202 which defines a needle valve seat 242 that seats a tip 219 of needle valve 204 in between fuel injection events. For example, during a fuel injection event, needle valve 204 is lifted off the needle seat 242 so that fuel is injected into an engine cylinder (not shown).

Lower chamber 216 further includes fuel entry orifice 244 which is configured to supply fuel to the inner cavity of lower chamber 216. Cross-drilled fluid channels (not shown) may be provided in needle valve 204 and facilitate fuel flow throughout lower chamber 216. Control orifices 238 function to route fuel flow up valve seat central passage 240. When coils 221 are de-energized and solenoid 248 is in an inactive state, check ball 226 is in sealing engagement with pilot valve seat 224. Check ball 226 also functions as a moveable valve member and thus moves out of sealing engagement with pilot valve seat 224. When check ball 226 is in sealing engagement with pilot valve seat 224, fuel from lower chamber 216 is blocked from entering upper chamber 214. When fuel is supplied to lower chamber 216 and check ball 226 is in sealing engagement with pilot valve seat 224, the inner cavity of lower chamber 216 becomes a highly pressurized volume. When check ball 226 functions as a moveable valve member and moves out of sealing engagement with pilot valve seat 224, high pressure fuel flows up valve seat central passage 240 through pilot valve seat 224 and into the inner cavity of upper chamber 214.

Fuel injector 200 utilizes needle valve 204 in a normally closed position. When needle valve 204 is in a normally closed position, coils 221 are de-energized and solenoid 248 is in an inactive state. Fuel injector 200 also includes a plunger return spring 251 that exerts a spring force downwardly such that plunger 212 and armature 100, 150 exert a downward force on check ball poppet 230, which thereby secures and retains check ball 226 into sealing engagement with pilot valve seat 224. Pressurized fuel is continuously supplied to the inner cavity of lower chamber 216.

When coils 221 are de-energized, fuel from lower chamber 216 is blocked from entering upper chamber 214, thus the inner cavity of lower chamber 216 becomes highly pressurized. Due to the fuel supply pressure acting downwardly on needle valve 204, a large downward hydraulic force pushes needle valve 204 in the downward direction. Needle spring 234 is also positioned in the inner cavity of lower chamber 216 and is compressed about the upper end of needle valve 204 such that when solenoid 248 is inactive, high pressure fuel as well as a downward spring force on needle valve 204 both act to secure needle valve 204 against needle valve seat 242. Securing needle valve 204 against needle valve seat 242 prevents high pressure fuel from exiting fuel injector 200 via injector orifice 236.

In an example use of armature 100, 150, 350, 450 in fuel injector 200, flange 108, 158, 358, 458 is positioned below solenoid 248 and coils 221. Plunger 212 includes a shaft portion that is disposed in and received by passage 112, 162, 362, 462 of armature 100, 150, 350, 450 to create a reciprocal connection such that when armature 100, 150, 350, 450 moves in an upward direction, plunger 212 moves therewith. Armature spring 218 may be biased against the flange 108, 158, 358, 458 to bias armature 100, 150, 350, 450 and plunger 212 in the upward direction.

In an embodiment, armature 100, 150, 350, 450 is configured to axially move in a fuel injector or other device as part of a valve assembly to facilitate opening and closing of the valve, such as valve 250 of fuel injector 200. In the illustrated embodiment of FIG. 11, stator assembly 222, which includes solenoid 248, may be disposed directly above armature 100, 150, 350, 450 so that when solenoid 248 is in an active state, armature 100, 150, 350, 450 moves to an upward position. When solenoid 248 is in an inactive state, armature 100, 150, 350, 450 moves to a downward position. An air gap such as, for example, air gap 232 may provide a distance between stator assembly 222 and armature 100, 150, 350, 450. The end surface at second end 106, 156, 356, 456 of armature 100, 150, 350, 450 may be supported by check ball poppet 230. Armature spring 218 may be biased against the flange 108, 158 to bias armature 100, 150, 350, 450 and plunger 212 in the upward direction.

Various aspects of the present disclosure are contemplated. According to a first aspect, an armature assembly for use in association with actuation of a valve is provided. The armature assembly includes an armature including a body extending along a longitudinal axis between a first end and an opposite second end. The body includes a flange at the first end and a shaft extending from the flange. The shaft extends along the longitudinal axis from the flange to the second end of the body. The body also includes a passage that extends along the longitudinal axis. The passage opens at the first and second ends of the body. The second end of the body includes an end surface extending around the passage. The end surface projects radially outwardly from an outer surface of the shaft to reduce a closing velocity of the armature.

In an embodiment, the body includes a circumferential protrusion extending around the shaft at the second end of the body. The end surface is formed on the circumferential protrusion.

In an embodiment, the circumferential protrusion includes an end surface diameter around the longitudinal axis and a length extending from the end surface along the longitudinal axis along a part of the shaft.

In an embodiment, the shaft of the body includes an outer surface. The outer surface extends from the second end of the body to the flange. The outer surface has a stepped surface profile.

In an embodiment, the stepped surface profile of the outer surface of the shaft includes a first shaft portion adjacent to the flange, a second shaft portion adjacent to the first shaft portion, and a third shaft portion adjacent to the second shaft portion. The first shaft portion has a first outer diameter, the second shaft portion has a second outer diameter, and the third shaft portion has a third outer diameter that is less than the second outer diameter. The end surface diameter is greater than the third outer diameter.

In an embodiment, the first shaft portion includes a circumferential groove extending therearound.

In an embodiment, the end surface diameter and the second diameter are equal to one another.

In an embodiment, the armature assembly includes a check ball poppet at the second end of the armature. The armature is movable to displace the end surface away from the check ball poppet to open the valve and to movable to displace the end surface into contact with the check ball poppet to close the valve.

In an embodiment, the end surface has an end surface diameter, and the check ball poppet has a poppet diameter. The end surface diameter is greater than the poppet diameter.

In an embodiment, the end surface has an end surface diameter, and the check ball poppet has a poppet diameter. The end surface diameter is equal to the poppet diameter.

In an embodiment, the end surface is planar.

According to another aspect of the disclosure, an armature for use in association with actuation of a valve is provided. The armature includes a body extending along a longitudinal axis between a first end and an opposite second. The body includes a flange at the first end and a shaft extending from the flange. The shaft extends along the longitudinal axis from the flange to the second end of the body. The body also includes a passage that extends along the longitudinal axis. The passage opens at the first and second ends of the body. The second end of the body includes an end surface extending around the passage. The end surface is formed by a circumferential protrusion at the second end of the shaft that projects radially outwardly from an outer surface of the shaft.

According to another aspect of the present disclosure, an armature for use in association with actuation of a valve is provided. The armature includes a body extending along a longitudinal axis between a first end and an opposite second end. The body includes a flange at the first end and a shaft extending from the flange. The shaft extends along the longitudinal axis from the flange to the second end of the body. The body includes a passage that extends along the longitudinal axis. The passage opens at the first and second ends of the body. The passage includes a first, proximal portion and a second, distal portion that has an inner diameter greater than that of the first, proximal portion of the passage.

In an embodiment, the shaft includes at least one hole extending therethrough to the passage.

In an embodiment, the shaft includes a shaft portion extending from the second end toward the first end. The shaft portion does not include any protrusions projecting outwardly therefrom or grooves formed radially therein.

In an embodiment, a ratio of a length of a plunger within the passage to the inner diameter of the second, distal portion of the passage is 2.

In an embodiment, the body is formed by a shaft piece that includes the shaft and a flange piece that includes the flange. The flange piece and shaft piece are separate pieces, and the shaft piece is supported in a recess of the flange piece.

According to another aspect of the disclosure, a armature for use in association with actuation of a valve is provided. The armature includes a body extending along a longitudinal axis between a first end and an opposite second end. The body includes a flange at the first end and a shaft extending from the flange. The shaft extends along the longitudinal axis from the flange to the second end of the body. A passage extends through the body along the longitudinal axis. The passage opens at the first and second ends of the body. The shaft includes a plurality of circumferential grooves extending therearound. The plurality of circumferential grooves are spaced longitudinally from one another along the shaft adjacent the second end of the body in order to receive fluid flow to increase a closing velocity of the armature.

In an embodiment, the shaft of the body includes an outer surface. The outer surface extends from the second end of the body to the flange. The outer surface has a stepped surface profile.

In an embodiment, the stepped surface profile of the outer surface of the shaft includes a first shaft portion adjacent to the flange and a second shaft portion adjacent to the first shaft portion. The first shaft portion has a first outer diameter and the second shaft portion has a second outer diameter. The second outer diameter is less than the first outer diameter. The stepped surface profile also includes a third shaft portion adjacent the second shaft portion. The third shaft portion extends from the second shaft portion to the second end of the body. The plurality of circumferential grooves is located on the third shaft portion.

In an embodiment, each of the circumferential grooves includes a cylindrical portion and a frusto-conical portion. The frusto-conical portion provides a transition from an outer surface of the shaft to the cylindrical portion of the circumferential groove.

In an embodiment, the frusto-conical portion extends from the cylindrical portion of the corresponding circumferential groove toward the second end of the body.

In an embodiment, each of the circumferential grooves includes a lip extending from the cylindrical portion thereof to the outer surface of the shaft.

In an embodiment, the lip is orthogonal to the longitudinal axis and the frusto-conical portion is oblique to the longitudinal axis.

In an embodiment, the plurality of circumferential grooves includes two circumferential grooves.

While illustrative embodiments of the disclosure have been illustrated and described in detail in the drawings and foregoing description, the same is to be considered as illustrative and not restrictive in character, it being understood that only certain exemplary embodiments have been shown and described and that all changes and modifications that come within the spirit of the claimed inventions are desired to be protected. It should be understood that while the use of words such as preferable, preferably, preferred or more preferred utilized in the description above indicates that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. An armature assembly for use in association with actuation of a valve, the armature assembly comprising:
an armature including a body extending along a longitudinal axis between a first end and an opposite second end, the body including:
a flange at the first end;
a shaft extending from the flange, the shaft extending along the longitudinal axis from the flange to the second end of the body;
a passage that extends along the longitudinal axis, the passage opening at the first and second ends of the body, wherein the second end of the body includes an end surface extending around the passage, the end surface projects radially outwardly from an outer surface of the shaft to reduce a closing velocity of the armature.

2. The armature assembly according to claim 1, wherein the body includes a circumferential protrusion extending around the shaft at the second end of the body, and the end surface is formed on the circumferential protrusion.

3. The armature assembly according to claim 2, wherein the circumferential protrusion includes:
an end surface diameter around the longitudinal axis; and
a length extending from the end surface along the longitudinal axis along a part of the shaft; and/or
wherein:
the shaft of the body includes an outer surface;
the outer surface extends from the second end of the body to the flange; and
the outer surface has a stepped surface profile.

4. The armature assembly according to claim 3, wherein the stepped surface profile of the outer surface of the shaft includes:
a first shaft portion adjacent to the flange, the first shaft portion having a first outer diameter;
a second shaft portion adjacent to the first shaft portion, the second shaft portion having a second outer diameter, wherein the second outer diameter is less than the first outer diameter; and
a third shaft portion adjacent the second shaft portion, the third shaft portion extending from the second shaft portion to the circumferential protrusion, the third shaft portion having a third outer diameter that is less than the second outer diameter, and the end surface diameter is greater than the third outer diameter.

5. The armature assembly according to claim 4, wherein the first shaft portion includes a circumferential groove extending therearound; and/or
wherein the end surface diameter and the second diameter are equal to one another.

6. The armature assembly according to claim 1, comprising a check ball poppet at the second end of the armature, wherein the armature is movable to displace the end surface away from the check ball poppet to open the valve and to movable to displace the end surface into contact with the check ball poppet to close the valve; and/or
wherein the end surface is planar.

7. The armature assembly according to claim 6, wherein the end surface has an end surface diameter, and the check ball poppet has a poppet diameter, and the end surface diameter is greater than the poppet diameter; and/or
wherein the end surface has an end surface diameter, and the check ball poppet has a poppet diameter, and the end surface diameter is equal to the poppet diameter.

8. An armature for use in association with actuation of a valve, the armature comprising:
a body extending along a longitudinal axis between a first end and an opposite second, the body including:
a flange at the first end;
a shaft extending from the flange, the shaft extending along the longitudinal axis from the flange to the second end of the body;
a passage that extends along the longitudinal axis, the passage opening at the first and second ends of the body, wherein the second end of the body includes an end surface extending around the passage, the end surface being formed by a circumferential protrusion at the second end of the shaft that projects radially outwardly from an outer surface of the shaft.

9. An armature for use in association with actuation of a valve, the armature comprising:
a body extending along a longitudinal axis between a first end and an opposite second end, the body including:
a flange at the first end;
a shaft extending from the flange, the shaft extending along the longitudinal axis from the flange to the second end of the body; and
a passage that extends along the longitudinal axis, the passage opening at the first and second ends of the body, wherein the passage includes a first, proximal portion and a second, distal portion that has an inner diameter greater than that of the first, proximal portion of the passage.

10. The armature of claim 9, wherein:
a) the shaft includes at least one hole extending therethrough to the passage; and/or
b) the shaft includes a shaft portion extending from the second end toward the first end, the shaft portion does not include any protrusions projecting outwardly therefrom or grooves formed radially therein; and/or
c) a ratio of a length of plunger within the passage to the inner diameter of the second, distal portion of the passage is 2; and/or
d) the body is formed by a shaft piece that includes the shaft and a flange piece that includes the flange, the flange piece and shaft piece being separate pieces, and the shaft piece is supported in a recess of the flange piece.

11. An armature for use in association with actuation of a valve, the armature comprising:
a body extending along a longitudinal axis between a first end and an opposite second end, the body including:
a flange at the first end;
a shaft extending from the flange, the shaft extending along the longitudinal axis from the flange to the second end of the body; and
a passage that extends along the longitudinal axis, the passage opening at the first and second ends of the body, wherein the shaft includes a plurality of circumferential grooves extending therearound, the plurality of circumferential grooves spaced longitudinally from one another along the shaft adjacent the second end of the body in order to receive fluid flow to increase a closing velocity of the armature.

12. The armature according to claim 11, wherein:
the shaft of the body includes an outer surface;
the outer surface extends from the second end of the body to the flange; and
the outer surface has a stepped surface profile; and/or
wherein each of the circumferential grooves includes a cylindrical portion and a frusto-conical portion, the frusto-conical portion providing a transition from an outer surface of the shaft to the cylindrical portion of the circumferential groove; and/or
wherein the plurality of circumferential grooves includes two circumferential grooves.

13. The armature according to claim 12, wherein the stepped surface profile of the outer surface of the shaft includes:
a first shaft portion adjacent to the flange, the first shaft portion having a first outer diameter;
a second shaft portion adjacent to the first shaft portion, the second shaft portion having a second outer diameter, wherein the second outer diameter is less than the first outer diameter; and
a third shaft portion adjacent the second shaft portion, the third shaft portion extending from the second shaft portion to the second end of the body, wherein the plurality of circumferential grooves is located on the third shaft portion.

14. The armature according to claim 12, wherein the frusto-conical portion extends from the cylindrical portion of the corresponding circumferential groove toward the second end of the body; and/or
wherein each of the circumferential grooves includes a lip extending from the cylindrical portion thereof to the outer surface of the shaft.

15. The armature according to claim 14, wherein the lip is orthogonal to the longitudinal axis and the frusto-conical portion is oblique to the longitudinal axis.
